# EUROPEAN PATENT APPLICATION

(11) **EP 2 574 019 A2**
(43) Date of publication of application: **27.03.2013**
(21) Application number: 12184745.3
(22) Date of filing: 17.09.2012
(51) Int. Cl.: H04M 1/50, H04M 3/42

(54) **Device effective to modulate a code and to provide content to a user**

(30) Priority: 23.09.2011 US 201161538370 P; 23.09.2011 US 201161538395 P; 23.09.2011 US 201161538443 P; 01.11.2011 US 201113286727
(71) Applicant: Sonic Notify Inc., New York, NY 10016 (US)
(72) Inventor: Bell, Alex, New York New York 10025 (US); Glanz, Jonathan, New York New York 10001 (US)
(74) Representative: Somervell, Thomas Richard

(57) **Abstract**

A system and method effective to provide content to a user. The system may include a sound device, a smart phone, and a processor. The sound device may output a modulated code. The sound device may include a processor effective to generate a periodic wave based on a code and a speaker in electrical communication with the processor. The speaker may output the modulated code based on the code. The smart phone may receive and demodulate the modulated code to reproduce the code. The smart phone may send the code to a processor. The processor may receive the code, determine content associated with the code, and send the content over the network to the smart phone. The smart phone may further receive the content and display the content on a display.

## Description

### CROSS-REFERENCE TO RELATED APPLICATIONS

The present application claims priority to provisional application number 61/538,370 entitled "SYSTEM EFFECTIVE TO ENCODE A SIGNAL AND PROVIDE CONTENT TO A USER" filed September 23, 2011 naming Alex Bell and Jonathan Glanz as inventors, which is co-pending; and claims priority to provisional application number 61/538,395 entitled "SYSTEM EFFECTIVE TO DECODE A SIGNAL AND PROVIDE CONTENT TO A USER" filed September 23, 2011 naming Alex Bell and Jonathan Glanz as inventors, which is co-pending; and to provisional application number 61/538,443 entitled "DEVICE EFFECTIVE TO ENCODE A SIGNAL AND TO PROVIDE CONTENT TO A USER" filed September 23, 2011 naming Alex Bell and Jonathan Glanz as inventors, which is co-pending; the entirety of these three applications is hereby incorporated by reference in their entirety.

### BACKGROUND OF THE INVENTION

### Field of the Invention

This disclosure relates to a system and method effective to provide targeted content to a potential user in sound communication with a sound device.

### Description of the Related Art

A smart phone may include devices and structures capable of communicating over a cellular or satellite network. Smart phones may also be capable of storing an application capable of utilizing some of the data available to the smart phone. For example, the application may be able to combine a user's contact list and location to generate additional content for the user.

### SUMMARY OF THE INVENTION

One embodiment of the invention is a system effective to provide content to a user. The system may comprise a sound device effective to modulate a code to produce a modulated code. The sound device may include a first processor effective to generate a periodic wave based on a code. The sound device may further include a speaker in electrical communication with the first processor, the speaker effective to receive the periodic wave and output a sound wave including a modulated code based on the code. The system may further comprise a smart phone in communication with the sound device. The smart phone may be effective to receive the modulated code, demodulate the modulated code to reproduce the code, and send the code over a network as a query to a second processor. The second processor may be effective to receive the query including the code, determine content associated with the code, and send the content to the smart phone. The smart phone may be further effective to receive the content and output the content.

Another embodiment of the invention is a method for providing content to a user. The method may comprise generating a periodic wave by a first processor based on a code. The method may further comprise sending the periodic wave to a speaker. The method may further comprise outputting, by the speaker, a sound wave including a modulated code, the modulate code being based on the code. The method may further comprise receiving, by a smart phone, the modulated code. The method may further comprise demodulating, by the smart phone, the modulated code to reproduce the code. The method may further comprise sending, by the smart phone, the code over a network as a query to a second processor. The method may further comprise receiving, by the second processor, the query including the code. The method may further comprise determining, by the second processor, content associated with the code. The method may further comprise sending, by the second processor, the content to the smart phone. The method may further comprise receiving the content at the smart phone. The method may further comprise outputting the content by the smart phone.

Yet another embodiment of the invention is a system effective to provide content to a user. The system may comprise a sound device effective to modulate a code to produce a modulated code. The sound device may include a first processor effective to generate a periodic wave based on a code and a speaker in electrical communication with the first processor. The speaker may be effective to receive the periodic wave and output a sound wave including a modulated code based on the code. The second processor may be effective to receive a query including the code from a smart phone, determine content associated with the code, and send the content to the smart phone.

### BRIEF DESCRIPTION OF THE FIGURES

The foregoing and other features of this disclosure will become more fully apparent from the following description and appended claims taken in conjunction with the accompanying drawings. Understanding that these drawings depict only some embodiments in accordance with the disclosure and are therefore not to be considered limiting of its scope, the disclosure will be described with additional specificity and detail by reference to the accompanying drawings in which:

Fig. 1 is a system drawing of a device effective to modulate a code and to provide content to a user in accordance with an embodiment of the invention.

Fig. 2 is a flow diagram illustrating a process which may be performed in accordance with an embodiment of the invention.

### DETAILED DESCRIPTION OF THE PREFERRED EMBODIMENT(S)

In the following detailed description, reference is made to the accompanying drawings which form a part thereof. In the drawings, similar symbols typically identify similar components unless context indicates otherwise. The illustrative embodiments described in the detailed description, drawings and claims are not meant to be limiting. Other embodiments may be utilized and other changes may be made without departing from the spirit or scope of the subject matter presented herein. It will be readily understood that the aspects of the present disclosure as generally described herein and as illustrated in the accompanying figures can be arranged, substituted, combined, separated and/or designed in a wide variety of different configurations all of which are explicitly contemplated herein.

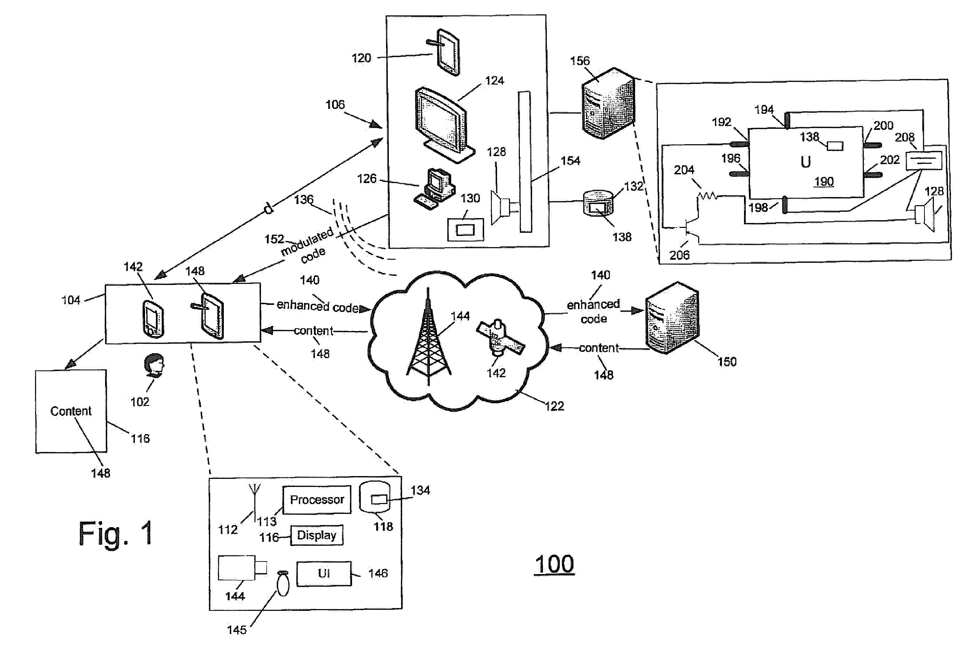

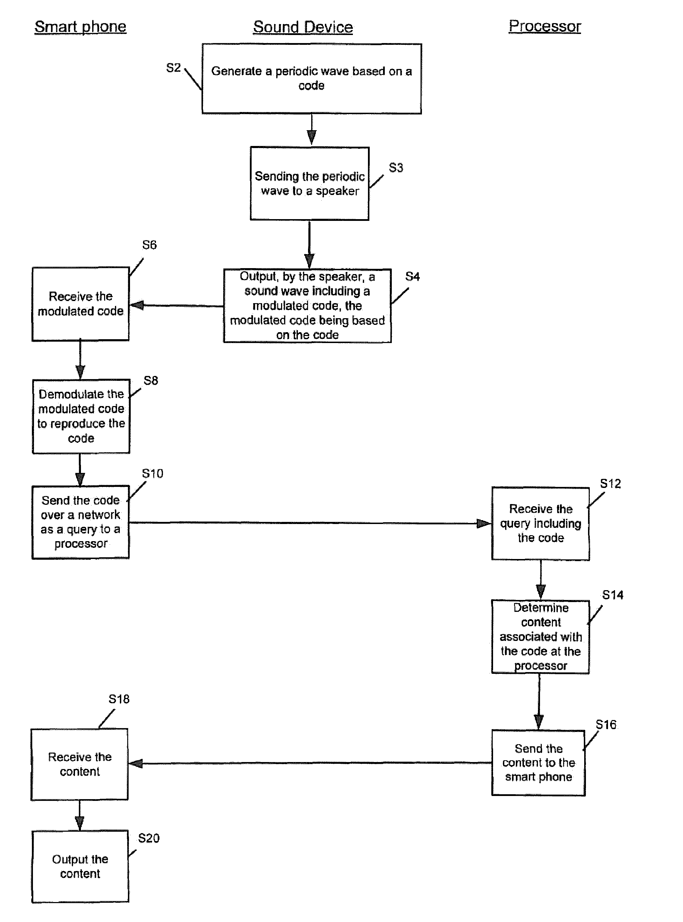

Referring to Fig. 1, there is shown a system 100 in accordance with an embodiment of the invention. In summary, a smart phone 104 may be configured to receive audio waves 136 output by a sound device 106. Waves 136 may be frequency modulated to modulate a binary code 138. Smart phone 104 may demodulate code 138 from modulated code 152 sent in waves 136 to reproduce code 138. Smart phone 104 may send an enhanced code 140 across a network 116 as a query to a processor 150. In response to a query including enhanced code 140, processor 150 may send content 148 to smart phone 104 to be output by smart phone 104. User 102 may be informed of receipt of content 148 such as through a vibration of smart phone 104. Content 148 may be anything that can be outputted by a smart phone such as a coupon, audio, video, audio-video, digital piece of content, movie, web page, a pointer to content, etc.

Smart phone 104 may include an antenna 112, a display 116, a memory 118, a user interface 146, a microphone 145 and a camera 144 all in communication with a processor 113. Antenna 112 may enable wireless communications with a cellular base station 144 or satellite 142 in network 122. Memory 118 may store an application 134 effective to provide instructions for processor 113.

Sound device 106 may be any device capable of outputting sound waves. For example, sound device 106 may be a smart phone 120, a television 124, a computer 126, a badge 130 such as a participant may wear in a conference, a speaker 128 such as a beacon, etc. In examples where sound device 106 is a beacon 128, beacon 128 could be placed on, for example, a shelf 154 in a store. Speaker 128 could also be a speaker effective to output sound waves audible by a human such as in a public address system. Sound device 106 may include and/or be in communication with a processor 156 and a memory 132 that may include code 138. Sound device 106 may be configured to adjust a volume magnitude of sound waves 136 based on desired distance between sound device 106 and a potential user 102 using smart phone 104. Based on a volume magnitude of sound waves 136 a range may be defined including locations where smart phone 104 has difficulty demodulating modulated code 152, and locations where smart phone 104 can demodulate modulated code 152.

The inventors have discovered that, as many different types of devices may be used for sound device 106, many different ranges of frequencies may be used to modulate code 138 on to sound waves 126 making demodulation of modulated code 152 complex. Further, an environment around sound device 106 may be noisy. Code 138 may be a binary code comprised of logic 0s and logic 1s. Sound device 106 may be configured, such as through processor 156; to modulate and output modulated code 152 by assignment of a first range of frequencies for a logic "0" and assignment of a second range of frequencies for a logic "1". This allows modulated code 152 to be output from a plurality of distinct sound devices 106 which may have different speaker resolution outputs.

For example, a logic "0" may be assigned to sound pulses in wave 136 with a frequency in the range between about 20,550 Hz and about 21,000 Hz. Similarly, a logic "1" may be assigned to sound pulses with a frequency in the range from about 21,000 Hz to about 22,000 Hz. Each sound pulse may be, for example, about 1ms in duration. Sound device 106 may thus be able to generate modulated code 152, including a series of logic 0s and 1s, by outputting sound pulses in a first range of frequencies, and a second range of frequencies, respectively. The entire modulated code 152 may last about 32 ms long and may include 32 logic bits. Modulated code 152 may be repeatedly and periodically output by sound device 106. In an example, a clock pulse may be output in between each sound pulse. For example, the clock pulse maybe in a third set of frequencies, such as that centered in between the first and second ranges of frequencies. In the example, the clock pulse may be at 21,000 Hz. The clock pulse may be used to denote the beginning of a new bit. Processor 156 may add code 138 to audio waves 136 in a variety of methods.

For example, if television 124 is being used to generate waves 136, processor 156 may digitally splice modulated code 152 in other outputted content. In examples where speaker 128 is used, processor 156 may similarly add modulated code 138 in line with other output content. In examples where a beacon is used, processor 156 or beacon 128 may be specifically designed to generate modulated code 152.

For example, an inexpensive device may be used to generate a square wave output to drive a speaker. As shown, processor 156 or beacon 128 may include a microcontroller 190, a voltage source 208, a resistor 204 and a switch 206. Voltage source 208 could be a 5 volt battery.

Microprocessor 190 could be a processor capable of working at a clock speed of over 100 kHz and may have a limited memory. Microprocessor 190 may be, for example, a PIC10F200OT with 6 output pins 192, 194, 196, 198, 200, 202. As shown, pins 196, 200 and 202 may be left open. Pins 194 and 198 may correspond to Vdd and Vss terminals and may be in electrical communication with voltage source 208. Microprocessor 190 may have one input/output pin 192. Pin 192 may in electrical communication with switch 206. Switch 206 may be a transistor such as an NPN or PNP transistor where pin 192 is in electrical communication with the base, resistor 204 is in electrical communication with the collector, and a terminal of voltage source 208 is in electrical communication with the emitter. The other end of resistor 204 may be in electrical communication with a first terminal of speaker 128. The second terminal of speaker 128 may be in electrical communication with voltage source 208. Code 138 may be stored in a memory of microprocessor 190. Microprocessor 190 may be configured to send to speaker 128 a periodic wave such as a square wave in a first range of frequencies corresponding to a logic 0. Microprocessor 190 may be configured to send to speaker 128 a square wave in a second range of frequencies corresponding to a logic 1. In this way, microprocessor 190 may thereby frequency modulate code 138 as discussed in more detail above. With this arrangement, switch 206, in response to the periodic wave, may selectively supply power from power supply 208 to speaker 128 and thereby generate a wave of a desired frequency from speaker 128.

Resistor 204 may be adjusted to control a volume magnitude of wave 136. For example, resistor 204 may be a variable adjustable resistor with a control wheel. The volume of wave 136 is proportional to a distance d, between smart phone 104 and sound device 106, where code 138 may be demodulated by smart phone 104. If the volume is too low, or smart phone 104 is too far away from sound device 106, smart phone 104 may have difficulty demodulating modulated code 152. For example, noise near sound device 106 may make demodulation of code 138 from modulated code 152 difficult if the volume is too low. Conversely, resistor 204 may be used to purposely limit distance d so that smart phone 104 may be able to demodulate code 138 from modulated 152 only when smart phone 104 is close to sound device 106. For example, the volume and d may be adjusted so that only smart phones 104 in the same aisle as a speaker 128 may be able to demodulate code 138.

In an example, resistor 204 could be set with a relatively high resistance, such as 500MΩ, resulting in a low volume of sound waves 136 so that distance d where smart phone 104 can demodulate modulated code 152 is 3 feet from sound device 106. In another example, resistor 204 may be set relatively low, such as 140Ω, so that distance d where smart phone 104 can demodulate modulated code 152 is 20 feet from sound device 106.

As microprocessor 190 may generate a simple square wave, an inexpensive disposable microprocessor 190 may be used. For example, microprocessor 190 may cost only $0.20 and processor 156 or beacon 128 may cost in total $0.75. Such an inexpensive processor may be used with a disposable support such as a badge 130.

Sound waves 136 may be received by microphone 145 of smart phone 104 and processed by processor 113 using instructions in application 134. Processor 113 may demodulate modulated code 152 to reproduce code 138. Processor 113 may then add additional context data to code 138 relating to smart phone 104 to produce enhanced code 140. For example, processor 113 may add information relating to an owner of application stored on smart phone 104 such as an indication of a particular brand, mark, or company. For example, application 134 may be owned by company X and may be used to promote sale of products relating to product X. Enhanced code 140 may include information regarding a location of smart phone 104 and/or a location of sound device 106. Enhanced code 140 may include an identifier of smart phone 104 so that, upon receipt of enhanced code 140, processor 150 may not repeatedly send content 148 to smart phone 104.

As mentioned above, enhanced code 140 may be sent over network 116 as a query to processor 150. In response to enhanced code 140, processor 150 may send content 148 over network 116 to smart phone 104 for output on display 116.

In an example, beacon 128 may sit on shelf 154 and output waves 136 including code 138 relating to brand X. Smart phone 104 may receive waves 136, demodulate code 138 and generate enhanced code 140. Processor 150 may receive enhanced 140 and send content 148 to smart phone 104 relating to brand X. For example, content 148 may include a coupon relating to brand X.

Among other benefits, an advertiser using a system in accordance with this disclosure maybe able to inexpensively reach a user's smart phone when the user is in sound communication with a real world place or when the user is experiencing media. Expensive hardware need not be used as in other devices that require processors and feedback loops to ensure that a particular frequency is emitted - as in situations where the particular value of the frequency is used as a query. A potential user's smart phone may be targeted at a particular location such as in an aisle in a store. In another example, a conference participant may wear an inexpensive, disposable badge with a beacon effective to output a sound wave with a modulated code. The code may result in content 148 indicating that a person (with the badge) is in close proximity of the smart phone and may further provide information about the person wearing the badge. A television commercial can output a code inaudible to humans in conjunction with an audible commercial.

Referring to Fig. 2, there is shown a process which may be performed in accordance with an embodiment of the invention. The process could be implemented using, for example, system 100 discussed above with respect to Fig. 1.

At step S2, at a sound device, a processor may generate a periodic wave based on a code. At step S3, the processor may send the periodic wave to a speaker. At step S4, the speaker may output a sound wave including a modulated code, the modulate code being based on the code.

At step S6, a smart phone may receive the modulated code. At step S8, the smart phone may demodulate the modulated code to reproduce the code. At step S10, the smart phone may send the code over a network as a query to a processor.

At step S12, the processor may receive the query including the code from the smart phone. At step S14, the processor may determine content associated with the code. At step S16, the processor may send the content to the smart phone.

At step S18, the smart phone may receive the content. At step S20, the smart phone may output the content.

While various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

## Claims

1. A system effective to provide content to a user, the system comprising:
a sound device effective to modulate a code to produce a modulated code; the sound device including
a first processor effective to generate a periodic wave based on a code; and
a speaker in electrical communication with the first processor, the speaker effective to receive the periodic wave and output a sound wave including a modulated code based on the code; and
a second processor effective to
receive a query including the code from a smart phone,
determine content associated with the code, and
send the content to the smart phone.

2. The system as recited in claim 1 and further comprising a smart phone in communication with the sound device, the smart phone effective to
receive the modulated code,
demodulate the modulated code to reproduce the code,
send the code over a network as a query to the second processor,
receive the content and output the content.

3. The system as recited in claim 1 or claim 2, wherein:
the periodic wave includes at least a first set of frequencies and a second set of the frequencies; and
the modulated code includes the code modulated on the first set of frequencies and the second set of frequencies.

4. The system as recited in claim 3, wherein:
the sound device further comprises a switch between the first processor and the speaker; and
a power supply is in electrical communication with the switch and the speaker.

5. The system as recited in claim 4, where the switch is effective to selectively supply power from the power supply to the speaker in response to the periodic wave.

6. The system as recited in claim 5, further comprising a resistor in between the switch and the power supply.

7. The system as recited in claim 6, wherein the resistor is variable and effective to adjust a volume of sound output by the speaker.

8. The system as recited in claim 4, wherein the switch is a npn or pnp transistor.

9. The system as recited in claim 1, wherein the first processor is a PIC10F200OT.

10. The system as recited in claim 5, wherein:
the first processor is a PIC10F200OT including first, second, third, fourth, fifth and sixth terminals;
the first and second terminals are in electrical communication with the power supply; and
the third terminal is in electrical communication with the switch,

11. The system as recited in claim 1, wherein the code is stored in the first processor.

12. A method for providing content to a user, the method comprising:
generating a periodic wave by a first processor based on a code;
sending the periodic wave to a speaker;
outputting, by the speaker, a sound wave including a modulated code, the modulate code being based on the code;
receiving, by a smart phone, the modulated code to reproduce the code, and sending, by the smart phone, the code over a network as a query to a second processor;
receiving, by the second processor, the query including the code,
determining, by the second processor, content associated with the code,
sending, by the second processor, the content to the smart phone; and receiving the content at the smart phone; and
outputting the content by the smart phone.

13. The method as recited in claim 12, wherein:
the periodic wave incudes at least a first set of frequencies corresponding to a logic 0 and a second set of frequencies corresponding to a logic 1; and
the modulated code includes the code modulated on the first set of frequencies and the second set of frequencies.

14. The method as recited in claim 13, further comprising:
sending the periodic wave to a switch to selectively supply power from a power supply to the speaker in response to the periodic wave.

15. The method as recited in claim 14, further comprising adjusting a resistance between the power supply and the switch to adjust a volume of sound output by the speaker.
